Europäisches Patentamt

European Patent Office

Office européen des brevets

(11) Publication number: **0 436 368 A2**

# EUROPEAN PATENT APPLICATION

(21) Application number: **90314125.7**

(22) Date of filing: **21.12.90**

(51) Int. Cl.⁵: **B60Q 1/44**

(30) Priority: **02.01.90 GB 9000021**

(43) Date of publication of application:
**10.07.91 Bulletin 91/28**

(84) Designated Contracting States:
**AT BE CH DE DK ES FR GB GR IT LI LU NL SE**

(71) Applicant: **Cook, Ian Derek**
**Grove House, Grove Lane**
**Hillingdon, Middlesex UB8 3RG(GB)**

(72) Inventor: **Cook, Ian Derek**
**Grove House, Grove Lane**
**Hillingdon, Middlesex UB8 3RG(GB)**

(74) Representative: **Lambert, Hugh Richmond et al**
**D. YOUNG & CO. 10 Staple Inn**
**London, WC1V 7RD(GB)**

(54) **Road vehicle brake lights.**

(57) In order to make the brake lights (18) of a road vehicle more noticable, they are flashed on and off during braking, preferably with a flashing characteristic which varies with the degree of braking which is being applied.

*FIG. 2.*

EP 0 436 368 A2

# ROAD VEHICLE BRAKE LIGHTS

This invention relates to road vehicle brake lights. In particular, the invention is concerned with a road vehicle having a braking system, at least one brake light, and means for operating the brake light in response to operation of the braking system to indicate to road users following the vehicle that the vehicle is being braked.

Such a system is known, and indeed has been compulsory in many countries for many years. A problem arises, however, in that following road users sometimes have difficulty in distinguishing a lit brake light from other lights on the rear of the vehicle, such as tail lights and rear fog warning lights. For example, it is common for a brake light of 21W power, a tail light of 5W and a fog light of 21W to be clustered together fairly closely at the rear of the vehicle, and indeed it is common for the tail and brake lights to be provided by the same bulb. When a vehicle is travelling normally after dark in fog, the power of the light cluster is 26W, and when the vehicle is braked, the power rises to 47W. Unless the following road user actually notices the brake light at the moment it is applied, it is all too easy not to notice that the power has risen from 26W to 47W, which is less than a 100% increase. The problem is compounded by the fact that not all road users keep the lenses of their rear brake lights clean, and therefore a 21W brake light with a dirty lens may have a lower intensity than a 5W tail light with a clean lens.

The present invention provides a solution to the above-mentioned problem by causing the brake lights to flash, preferably with a flashing characteristic (such as the flash "on" period) which varies according to the degree of braking. The flashing of the brake light means that a following road user will be repeatedly warned that the vehicle is being braked. Furthermore, by changing the characteristic of the flash with changes in the degree of braking, the following road user will be given an indication of how hard the vehicle is being braked, especially if similar flashing characteristics are generally adopted in any particular country.

There follows a description, by way of example of a specific embodiment of the present invention and modifications thereto, with reference to the accompanying drawings, in which:

Figure 1 is a perspective view showing the rear of a motor car;

Figure 2 is a schematic view of the braking system and brake light circuit of the motor car;

Figure 3 is a graph showing how the flash "on" period is related to brake pressure;

Figure 4 is a waveform showing how the flashing characteristic differs under different degrees of braking;

Figure 5 shows in greater detail the circuitry of the flasher unit; and

Figures 6 to 8 show alternative detector and flasher arrangements.

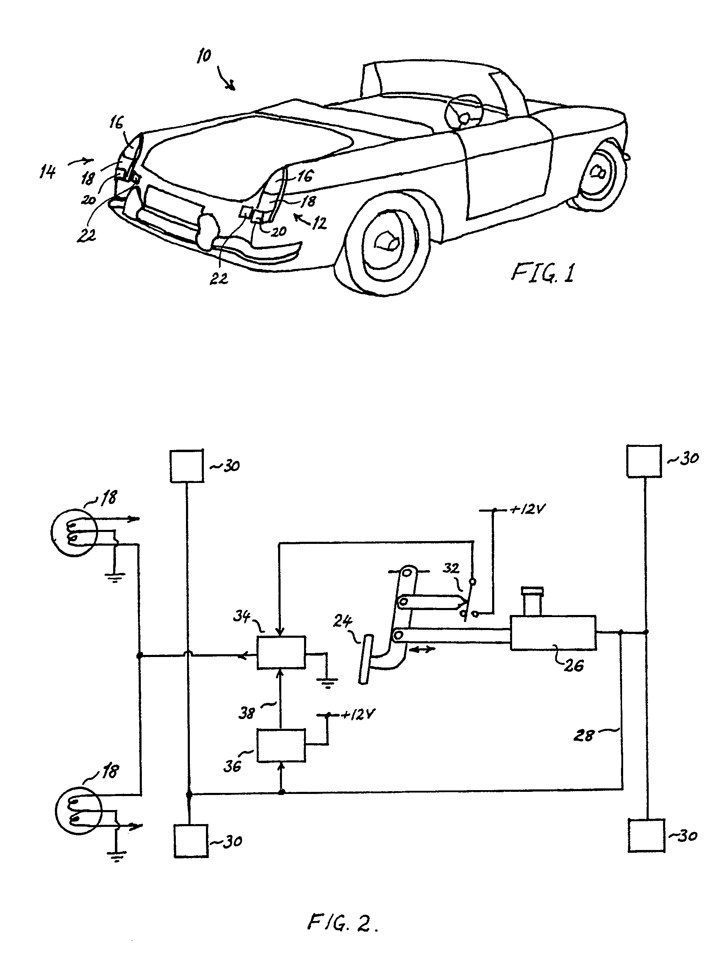

Referring to Figure 1, a motor car 10 has a pair of rear light clusters 12, 14, each having a turn indicator 16, combined tail and brake light 18, and a reflector 20. Also, adjacent each cluster 12, 14, there is a rear fog warning light 22.

Referring to Figure 2, the braking system of the car comprises a foot pedal 24 which operates a hydraulic master cylinder 26. An arrangement of pipes 28 connects the master cylinder 26 to four slave cylinders 30 which actuate the brake for each wheel of the car. The electrical brake light circuit shown in Figure 2 includes a brake switch 32 operated by the foot pedal 24 and connected on one side to the car's electrical supply. The circuit also includes the brake filaments of the tail/brake lights 18 which are grounded on one side. Rather than the other side of each brake light filament being connected directly to the brake switch 32, they are connected via a flasher unit 34. The arrangement also includes a pressure transducer 36 which is connected to the brake pipe 28 and supplies an electrical signal on the line 38 to the flasher unit 34.

One form of flasher unit is shown in Figure 5, and comprises an astable multivibrator circuit having a constant time period in one state defined by resistor R1 and capacitor C1 and a variable time period in the opposite state defined by the capacitor C2 and the resistance between line 38 and the supply voltage, if a transducer 36 is used which provides a variable effective resistance between the line 38 and the supply voltage line, or by an optional resistor R2 (shown in dotted line) and the voltage on line 38 if a transducer 36 is used which provides a variable effective voltage on line 38. One side of the multivibrator has a simple load resistor R3, and the other side is loaded by the coil RC of a relay 40 with a reverse biased diode D included to clamp coil induced voltages. The positive rail 42 of the multivibrator is connected to the brake switch 32 so that the multivibrator is powered up only when the brake pedal 24 is depressed. The relay 40 has a switch RS connected between the positive rail 42 and the brake lights 18.

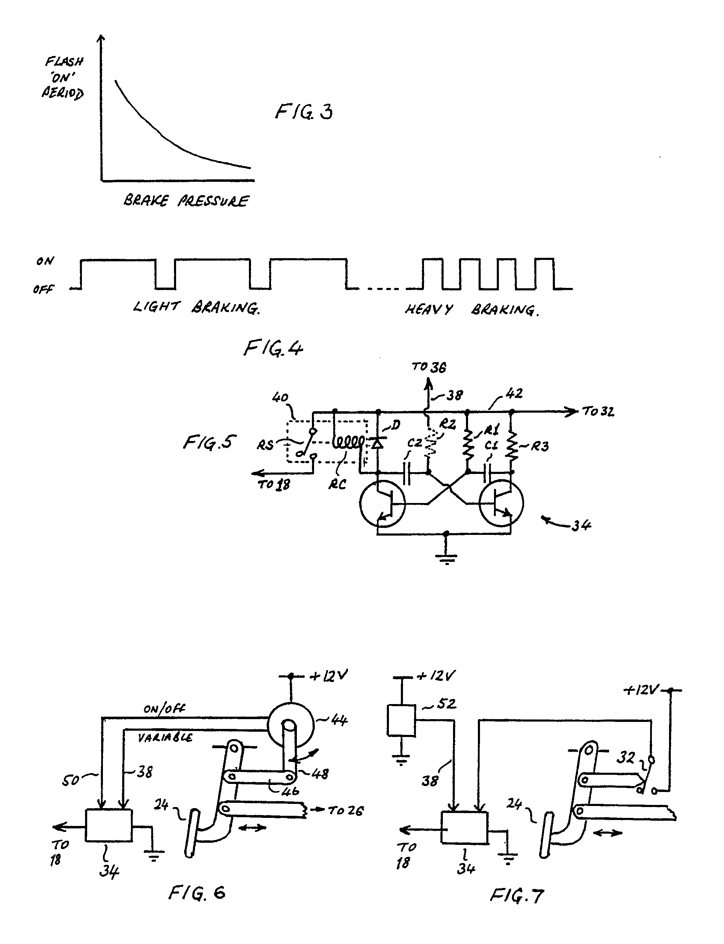

It will therefore be appreciated that, when the brake pedal 24 is not depressed , the brake lights 18 are not illuminated. However, when the pedal 24 is depressed, the brake lights 18 are flashed with a constant "off" period defined by resistor R1 and capacitor C1, and with a variable "on" period defined by the capacitor C2 and the variable signal provided by the transducer 36 on line 38. The transducer is arranged so that, as the brake pressure increases, the flash "on" period decreases as shown by the graph of Figure 3 and the waveform of Figure 4. The circuit may be set up so that the constant "off" period is, for example, in the range of 0.3 to 0.5 seconds and so that the "on" period is variable between, for example, 2 seconds for light braking and the same period as the "off" period for maximum braking, i.e. 0.3 to 0.5 seconds.

As an alternative to the multivibrator circuit of Figure 5 which uses discrete components, an integrated timer circuit may be used such as type NE555V. The pressure transducer may be of the piezo-electric type or other suitable type.

Referring to Figure 6, an alternative form of detector is illustrated. Rather than employing a pressure transducer, an electrical potentiometer 44 with on-off switch is coupled via a linkage 46 and crank 48 to the brake pedal 24. The on-off switch is connected between the positive supply and a line 50 to the positive rail 42 of the multivibrator, and the potentiometer is connected between the positive supply and the line 38 to the capacitor C2 of the multivibrator. Thus, when the brake pedal 24 is depressed, the brake lights 18 flash, and the "on" period is varied by the potentiometer in dependence upon the degree of depression of the brake pedal 24.

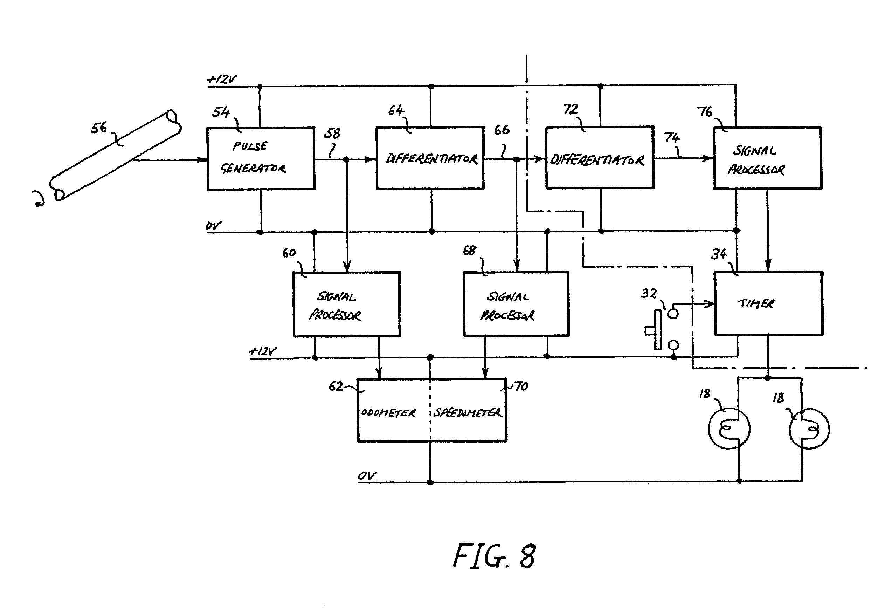

Referring to Figure 7, a further alternative form of detector is illustrated. Rather than employing a pressure transducer, an accelerometer 52 is used which supplies a signal on line 38 which varies with the degree of deceleration of the vehicle and therefore varies the "on" flash period in a similar manner to that described above.

Figure 8 shows a further alternative arrangement, which is especially suitable for a vehicle which has electronic instrumentation. A pulse generator 54 detects rotation of a gearbox output shaft 56 of the vehicle and provides a series of pulses on line 58 having a frequency dependent on the speed of rotation. The signal on line 58 is processed by a circuit 60 and supplied to an odometer 62 which displays the distance travelled by the vehicle. The signal on line 58 is also differentiated by a circuit 64 to produce a signal on line 66 dependent on the speed of the vehicle, and this signal is processed by a circuit 68 and supplied to a speedometer 70. The signal on line 66 is also differentiated by a circuit 72 to produce a signal on line 74 which is dependent on the accleration of the vehicle, and this signal is processed by a circuit 76 and supplied to the timer. As in the previously described embodiments, the timer also receives a signal from the brake switch 32, and when the switch is closed, operates the brake lights 18 with a characteristic which varies with the accleration or deceleration of the vehicle. It will be appreciated that a vehicle which has electronic instrumentation will already be fitted with many of the elements of the arrangement of Figure 8, indeed those to the left of the chain-dotted line, and that the only additional elements which are required to incoporate the invention are the differentiator, signal processing and time circuits 72, 76, 34, respectively.

It will be appreciated that other modifications may be made to the arrangements described above. For example, rather than varying the flash "on" period with variations in the degree of braking, it is possible to vary the flash "off" period, or both the "on" and "off" periods.

Furthermore the vehicle may be fitted with a high-level central brake light (as is commonly fitted to, for example, Volvo (RTM) cars), and in this case the central light may be flashed as described above, whereas the left and right brake lights are lit continuously while the brake is applied.

Moreover, a relay may be included in the supply to the rear fog lights so that when they are on and the brake is applied, the rear fog lights flash in unison with the brake light(s).

## Claims

1. A road vehicle having a braking system, at least one brake light, and means for operating the brake light in response to operation of the braking system to indicate to road users following the vehicle that the vehicle is being braked, characterised in that the brake light operating means includes means to detect a parameter related to the degree of braking of the vehicle, and means to flash the brake light with a flashing characteristic which varies with variations in the detected parameter.

2. A vehicle as claimed in claim 1, wherein the braking system is hydraulic, and characterised in that the parameter detecting means is operable to detect the hydraulic pressure in the braking system.

3. A vehicle as claimed in claim 1, characterised in that the parameter detecting means comprises an accelerometer for detecting the rate of deceleration of the vehicle.

4. A vehicle as claimed in claim 1, wherein the braking system includes a brake pedal, and characterised in that the parameter detecting means is operable to detect the degree of depression of the brake pedal.

5. A vehicle as claimed in any preceding claim, characterised in that, under braking, the flashing means is operable to provide an "on" period of the brake light which varies with variations in the detected parameter and an "off" period of the brake light which is substantially constant.

6. A vehicle as claimed in claim 5, characterised in that the flashing means is operable to decrease the "on" period with an increasing degree of braking.

7. A road vehicle having a braking system, at least one brake light, and means for operating the brake light in response to operation of the braking system to indicate to road users following the vehicle that the vehicle is being braked, characterised in that the brake light operating means includes means to detect a parameter related to the degree of braking of the vehicle, and means to flash the brake light with a flashing characteristic which varies with variations in the detected parameter and which is dependent upon the degree of braking applied.

FIG. 1

FIG. 2.

FLASH 'ON' PERIOD

BRAKE PRESSURE

FIG. 3

ON

OFF

LIGHT BRAKING.  ....  HEAVY BRAKING.

FIG. 4

FIG. 5

TO 36

40

RS

RC

TO 18

D

C2

R2

R1

C1

R3

38

42

TO 32

34

FIG. 6

ON/OFF

+12V

44

VARIABLE

48

46

50

38

TO 26

24

34

TO 18

FIG. 7

+12V

52

38

+12V

32

24

34

TO 18

FIG. 8

EP 0 436 368 A2